(19) Europäisches Patentamt
European Patent Office
Office européen des brevets

(11) **EP 4 237 721 B1**

(12) **EUROPÄISCHE PATENTSCHRIFT**

(45) Veröffentlichungstag und Bekanntmachung des Hinweises auf die Patenterteilung:
**30.04.2025 Patentblatt 2025/18**

(21) Anmeldenummer: **21798017.6**

(22) Anmeldetag: **20.10.2021**

(51) Internationale Patentklassifikation (IPC):
**F16L 5/04** (2006.01)   **A62C 2/06** (2006.01)
**H02G 3/04** (2006.01)

(52) Gemeinsame Patentklassifikation (CPC):
**F16L 5/04; A62C 2/065; H02G 3/0412; H02G 3/22; A62C 3/16**

(86) Internationale Anmeldenummer:
**PCT/EP2021/079078**

(87) Internationale Veröffentlichungsnummer:
**WO 2022/090025 (05.05.2022 Gazette 2022/18)**

(54) **VERFAHREN ZUR HERSTELLUNG EINER DICHTUNGSBAUGRUPPE**

PROCESS FOR THE MANUFACTURE OF A SEAL ASSEMBLY

PROCÉDÉ DE FABRICATION D'UN MODULE D'ÉTANCHÉITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2020 EP 20205113**

(43) Veröffentlichungstag der Anmeldung:
**06.09.2023 Patentblatt 2023/36**

(73) Patentinhaber: **Hilti Aktiengesellschaft**
**9494 Schaan (LI)**

(72) Erfinder:
• **BOHN, Uwe-Michael**
**86438 Kissing (DE)**
• **DREXL, Michael**
**86938 Schondorf (DE)**
• **FÖRSTER, Julia**
**86879 Wiedergeltingen (DE)**

(74) Vertreter: **Hilti Aktiengesellschaft**
**Corporate Intellectual Property**
**Feldkircherstrasse 100**
**Postfach 333**
**9494 Schaan (LI)**

(56) Entgegenhaltungen:
AT-B- 411 617          JP-A- 2000 240 854
JP-A- 2016 020 629    JP-B2- 3 989 291

**Beschreibung**

Technisches Gebiet

Die Erfindung betrifft ein Verfahren zum brandschutzgerechten Abdichten (d. h. Abschotten) einer Öffnung, durch die eine Leitung geführt ist, in bekannten Untergründen wie Porenbeton, Trockenbau, Holzbauweisen u.v.m., beispielsweise in einer Wand oder Decke eines Gebäudes oder eines anderen Raums. Des Weiteren betrifft die Erfindung eine zu demselben Zweck vorkonfektionierte Dichtungsbaugruppe sowie ein Verfahren zu deren Herstellung.

Technischer Hintergrund

Aus dem Stand der Technik sind für Rohr- und Kabelinstallationen mit einem Durchmesser von mehr als 32 mm ausgelegte Brandschutzprodukte bekannt, wie beispielsweise eine etwa 125 mm breite Brandschutzbandage mit einer äußeren Träger- oder Gewebeschicht und einem darauf aufgebrachten, intumeszierenden Material, die zweilagig um das abzuschottende Rohr im Bereich der Öffnung gelegt wird. Eine derartige Brandschutzbandage ist beispielsweise unter der Bezeichnung "Brandschutzbandage CFS-B" bekannt, die auch hierin dafür verwendet wird. Zum Abdichten der Öffnung werden dabei zusätzliche Befestigungs- und Dichtungsmittel, unter anderem Acrylatdichtmassen, eingesetzt. Andererseits werden Elektroleerrohre im Durchmesserbereich bis 16 mm in der Regel mit einer Standard-Testkonfiguration abgedeckt.

Brandschutz für kleine oder dünne Rohre im dazwischen liegenden Durchmesserbereich (16 mm < Ø < 32 mm) wird bei den innovativen Lösungen im Stand der Technik dieser Art meist nicht gezielt berücksichtigt und auch in dem als Europäische Technische Bewertung bzw. European Technical Assessment (ETA) bekannten, allgemein anerkannten Nachweis zur technischen Brauchbarkeit eines Bauproduktes im Sinne der Bauproduktenverordnung in den Mitgliedsstaaten der EU nicht ausreichend abgebildet. Häufige Anwendungen in diesem Durchmesserbereich stellen hauptsächlich Leitungen von Fußbodenheizungen, aber auch beispielsweise kleine Versorgungsleitungen im Laborbereich dar. Weitere Beispiele sind unter anderem flexible Elektroinstallationsrohre, die meist mit Steuerleitungen der Haustechnikanlagen belegt sind.

Die Verwendung einer herkömmlichen Brandschutzbandage, wie beispielsweise CFS-B, als intumeszierendes Produkt bietet sich durch die einfache Verarbeitung an, jedoch ist der geforderte doppellagige Einbau meist überdimensioniert, zumal die Montage auf beiden Seiten der Abschottung, d. h. auf beiden Seiten der brandschutzgerecht abzudichtenden Durchgangsöffnung, erfolgen muss.

Das Dokument JP2000240854A zeigt eine feuerfeste Sicherheitskonstruktion für den Boden, mit thermischer Ausdehnungseigenschaft, Dichtungsmasse mit der erforderlichen Dicke und Länge, die um die Rohrleitung gewickelt und mit Klebeband befestigt wird.

Um heute eine Abschottung (d. h. brandschutzgerechte Versiegelung oder Abdichtung) einer Leitungsdurchführung zu bauen, die den gesetzlichen Anforderungen für eine Zulassung genügt, ist im genannten Rohr-Durchmesserbereich zwischen 16 mm und 32 mm meist ein Abschottungsprodukt zu verwenden, wie es bei größeren Rohren notwendig wäre. D. h. die derzeit angebotenen technischen Lösungen sind für diesen Anwendungsbereich überdimensioniert. Zudem geht deren Installation meist mit der Verwendung von Acrylatdichtmassen einher, welche eine nasse Installation darstellen und somit grundsätzlich unsauber sind und Trocknungszeiten beinhalten.

Es fehlt somit für den Durchmesserbereich von Rohren oder anderen Leitungen zwischen 16 mm und 32 mm eine wirtschaftliche und einfach zu installierende Lösung zur brandschutzgerechten Abdichtung der Leitungsdurchführung in einer Wand oder Decke, welche dieselben Leistungsmerkmale von bis zu EI120 (gemäß EN-Feuerwiderstandsklassen für Raumabschluss und Hitzebarriere bzw. Wärmedämmung unter Brandeinfluss) wie die derzeitig vergleichbaren Produkte für Rohre mit größeren Durchmessern, beispielsweise die Brandbandage CFS-B mit zugehörigen vorgeschriebenen Abdichtungsmitteln, anbieten.

Es ist Aufgabe der vorliegenden Erfindung, ein Verfahren zum brandschutzgerechten Abdichten einer Leitungsdurchführung bereitzustellen, das insbesondere für den Durchmesserbereich von Rohren oder anderen Leitungen zwischen 16 mm und 32 mm eine wirtschaftliche und einfach zu installierende Lösung darstellt und insbesondere dieselben Leistungsmerkmale von bis zu EI120 (siehe oben) wie die vergleichbaren herkömmlichen Produkte für Rohre mit größeren Durchmessern, beispielsweise die Brandbandage CFS-B (siehe oben) mit zugehörigen vorgeschriebenen Abdichtungsmitteln, anbieten. Es ist auch Aufgabe der Erfindung, eine entsprechende vorkonfektionierte Dichtungsbaugruppe sowie ein Verfahren zu deren Herstellung anzugeben.

Offenbarung der Erfindung

Diese Aufgabe wird durch ein Verfahren zum Herstellen einer Dichtungsbaugruppe zum brandschutzgerechten Abdichten einer Öffnung gemäß Anspruch 1 gelöst. Weitere Ausgestaltungen sind in den abhängigen Ansprüchen angegeben. Alle in den Ansprüchen und der Beschreibung für das jeweilige Verfahren genannten weiterführenden Merkmale und Wirkungen, insbesondere Merkmale und Wirkungen der geeigneten Materialien und der geometrischen Anordnung einzelner Bestandteile der Abschottung, können auch in Bezug auf das jeweils andere Verfahren, die Dichtungsbaugruppe und deren Herstellung gelten, wie auch umgekehrt.

Gemäß einem ersten Aspekt ist ein Verfahren zum brandschutzgerechten Abdichten einer Öffnung (Leitungsdurchführung), durch die eine Leitung geführt ist, in einer Wand oder Decke eines Gebäudes oder eines anderen Raums vorgesehen. Zunächst wird eine bandförmige Brandschutzbandage bereitgestellt, die feuerhemmendes und/oder intumeszierendes Material aufweist und beispielsweise als herkömmliche, käuflich erwerbbare Rollenware vorliegen kann. Es kann sich dabei beispielsweise um die eingangs erwähnte herkömmliche Brandschutzbandage CFS-B handeln. Die Brandschutzbandage wird nun zu einer solchen Länge abgelängt, d. h. abgeschnitten, die einem einfachen Umfang der abzudichtenden Leitung mit oder ohne einen geringfügigen Überlapp entspricht. Der geringfügige Überlapp kann beispielsweise weniger als ein Zehntel des Leitungsumfangs betragen und dazu dienen, sicherzustellen, dass die Brandschutzbandage zu einer durchgehenden einfachen Lage ohne Unterbrechungen um die Leitung herum gelegt werden kann und/oder dass die dabei in Umfangsrichtung aufeinandertreffenden Enden der Brandschutzbandage miteinander verbunden werden können.

Die abgelängte Brandschutzbandage wird nun um die Leitung herum gelegt, so dass eine einfache Lage der Brandschutzbandage, gegebenenfalls mit dem geringfügigen Überlapp in Umfangsrichtung, gebildet wird. Dabei wird die Brandschutzbandage so an der Leitung angelegt, dass ein Großteil der Brandschutzbandage, insbesondere mindestens eine Hälfte von deren Breite, innerhalb der Öffnung in der Wand/Decke liegt und nur deren Restbreite aus der Öffnung herausragt. Wie weit die Brandschutzbandage in die Öffnung hinein bzw. aus dieser herausragt, kann je nach Anwendungsfall, insbesondere je nach Wanddicke und/oder je nach Leitungsdurchmesser, variieren.

Danach wird eine Knetmasse ringförmig an dem aus der Öffnung ragenden Teil der Brandschutzbandage so angelegt, dass ein Knetmassenring (insbesondere in etwa scheiben- bzw. kreisringförmig, wobei es nicht auf eine regelmäßige Form ankommt) eines etwas größeren Außendurchmessers als der Öffnungsdurchmesser gebildet bzw. durch Kneten geformt wird. Der Knetmassenring wird so geformt, dass er die Öffnung, d. h. den Ringspalt zwischen der Leitung und dem Öffnungsrand, außenseitig schließt und dabei etwas über den Öffnungsrand in der Decke bzw. Wand hinausgeht. Mit anderen Worten überdeckt der so geformte Knetmassenring den Ringspalt und wird sowohl an der Brandschutzbandage als auch an dem Öffnungsrand angedrückt, wodurch die Leitungsdurchführung abgedichtet wird.

Auf diese Weise kann eine brandschutzgerechte Abdichtung einfach und sauber, insbesondere auch nachträglich und/oder über eine regelmäßige oder unregelmäßige Öffnung einer beliebigen Geometrie gebaut werden.

Eine geeignete Knetmasse ist idealerweise plastisch verformbar, um durch das Kneten an die jeweilige individuelle Form des Ringspalts zwischen der Leitung und dem Öffnungsrand zu dessen Versiegelung anpassbar zu sein. Die Knetmasse kann ferner dicht und/oder optional auch haftend ausgebildet sein. Letzteres ist allerdings keine zwingende Voraussetzung, weil der Knetmassenring auch allein durch das Anpressen an die um die Leitung liegende Brandschutzbandage einerseits und an die Wand bzw. Decke andererseits, und beispielsweise zusätzlich durch ein teilweises Einpressen der Knetmasse in den dazwischenliegenden Ringspalt, bereits ausreichend gut an der Leitungsdurchführung befestigbar ist.

Es kann sich bei der Knetmasse beispielsweise um ein vernetztes Kautschukprodukt auf Gummibasis handeln. Es kann insbesondere eine dauerplastische Butylkautschukmischung sein.

Um die Brandschutzeigenschaften zu verbessern, kann die Knetmasse insbesondere auch Brandschutzadditive enthalten. Die Knetmasse kann beispielsweise flammhemmend ausgebildet oder intumeszierend sein, sodass sie bei Hitzeeinwirkung aufschäumt und dadurch im Brandfall entstehende Fehlstellen in der Öffnung, beispielsweise durch eine schmelzende Leitung, verschließen kann.

Das Verfahren zeichnet sich durch einen sehr geringen Verarbeitungs- und Werkzeugaufwand aus. Es kann im Grunde einfach und schnell von Hand ausgeführt werden. Die resultierende Abdichtung ist sofort funktionsfähig: Keine zusätzlichen Trocknungszeiten und auch keine zusätzlichen Dichtmassen sind erforderlich. Dies kann insbesondere eine deutliche Vereinfachung im Vergleich zu den eingangs erwähnten herkömmlichen Verfahren bedeuten.

Das Verfahren ist insbesondere bestens für das brandschutzgerechte Abdichten einer Leitungsdurchführung ausgelegt und dimensioniert, wenn die Leitung - etwa ein Rohr oder Kabel - einen Durchmesser in einem Bereich zwischen etwa 16 mm und etwa 32 mm aufweist. Der notwendige Materialbedarf kann direkt an den Rohr- oder Kabeldurchmesser und an die Größe der Öffnung in der Wand bzw. Decke angepasst werden, was sehr ressourcenschonend ist. Die typischerweise als Rollenware verfügbare Brandschutzbandage herkömmlicher Art kann durch das Ablängen direkt an den Rohr- oder Kabeldurchmesser und an die Größe der Öffnung in der Wand bzw. Decke angepasst werden. Wie ein weiter unten im Detail beschriebenes Ausführungsbeispiel zeigt, kann damit im Vergleich zu einer bekannten Einbaulösung mit CFS-B, die für eine dickere Leitung ausgelegt ist und eine doppelte Lage der Brandschutzbandage bei deren um ein vielfaches größerer Breite erfordert, eine Materialeinsparung um ca. 88% erreicht werden.

Gemäß einem weiteren Aspekt der Erfindung ist ein Verfahren zum Herstellen einer Dichtungsbaugruppe zum brandschutzgerechten Abdichten einer Öffnung, durch die eine Leitung geführt ist (Leitungsdurchführung), in einer Wand oder Decke eines Gebäudes oder eines anderen Raums vorgesehen. Das Verfahren umfasst folgende Schritte: Zunächst wird eine bandförmige Brandschutzbandage bereitgestellt, die feuerhemmendes und/oder intumeszierendes Material aufweist und beispielsweise als herkömmliche, käuflich erwerbbare Rollenware vorliegen kann. Es kann sich dabei beispielsweise um die eingangs erwähnte herkömmliche Brandschutzbandage CFS-B handeln. Die Brandschutzbandage wird nun zu einer solchen Länge abgelängt, d. h. abgeschnitten, die einem einfachen Umfang der abzudichtenden Leitung mit oder ohne einen geringfügigen Überlapp entspricht. Der geringfügige Überlapp kann beispielsweise weniger als ein Zehntel des Leitungsumfangs betragen und dazu dienen, sicherzustellen, dass die Brandschutzbandage zu einer durchgehenden einfachen Lage ohne Unterbrechungen um die Leitung herum gelegt werden kann und/oder dass die dabei in Umfangsrichtung aufeinander treffenden Enden der Brandschutzbandage miteinander verbunden werden können.

Danach wird ein Knetmassenstreifen entlang eines der zwei Ränder der abgelängten Brandschutzbandage angebracht, die dazu bestimmt sind, sich in Umfangsrichtung der Leitung zu erstrecken. Hierzu wird die Knetmasse in Form eines dicken Streifens an einer nicht zum Anlegen an der Leitung vorbestimmter Außenoberfläche der Brandschutzbandage an dem genannten Rand angedrückt oder anders befestigt. Der Knetmassenstreifen soll dabei eine ausreichende Dicke und Breite aufweisen, um mit der darin enthaltenen Knetmasse einen Ringspalt zwischen der Leitung und einem Öffnungsrand der zu versiegelnden Leitungsdurchführung abzudecken und abzudichten.

Die mit dem Knetmassenstreifen versehene Brandschutzbandage kann danach optional zu einer einfachen Lage zusammengrollt werden, die zum Anlegen an der abzudichtenden Leitung ausgelegt ist und hierzu einen nahezu gleichen, nur geringfügig größeren Innendurchmesser als der Umfang der Leitung aufweist. Dabei können die in Umfangsrichtung überlappenden Enden der Brandschutzbandage beispielsweise durch einen Teil des Knetmassenstreifens oder durch weitere Knetmasse temporär aneinander befestigt werden.

Alternativ oder zusätzlich kann optional eine abziehbare Transportschutzfolie auf mindestens einer Oberfläche des Knetmassenstreifens angebracht werden, um beim Transport der Dichtungsbaugruppe und/oder beim Anbringen der Dichtungsbaugruppe an der zu versiegelnden Leitungsdurchführung den Knetmassenstreifen vor mechanischer Beschädigung oder vor einem unbeabsichtigten Anhaften an nicht hierzu vorgesehenen Oberflächen zu schützen.

Die resultierende Dichtungsbaugruppe ist für das nachfolgende Verfahren zum brandschutzgerechten Abdichten einer Leitungsdurchführung vorkonfektioniert:
Gemäß einem weiteren Aspekt der Erfindung ist ein Verfahren zum brandschutzgerechten Abdichten einer Leitungsdurchführung unter Verwendung einer vorkonfektionierten Dichtungsbaugruppe der hierin dargelegten Art vorgesehen. Das Verfahren umfasst folgende Schritte:
Die wie beschrieben vorkonfektionierte Dichtungsbaugruppe wird um die Leitung herum gelegt, so dass eine Lage der Brandschutzbandage, gegebenenfalls mit Überlapp, an der Leitung gebildet wird, wobei der mit dem Knetmassenstreifen versehene umfangsbildende Rand der Brandschutzbandage aus der Öffnung nach außen ragt. Vor oder nach diesem Schritt wird eine gegebenenfalls vorhandene Transportschutzfolie von dem Knetmassenstreifen abgezogen.

Danach wird der Knetmassenstreifen zu einem Knetmassenring (insbesondere in etwa scheiben- bzw. kreisringförmig, wobei es nicht auf eine regelmäßige Form ankommt) eines etwas größeren Außendurchmessers als der Öffnungsdurchmesser durch Kneten geformt, sodass der Knetmassenring die Öffnung schließt und etwas über deren Rand hinausgeht. Der Knetmassenring wird dabei und/oder anschließend an der Brandschutzbandage und an dem Öffnungsrand angepresst, sodass die Leitungsdurchführung dadurch abgedichtet wird. Im Übrigen gilt bei diesem Verfahren alles, was weiter oben für das Verfahren nach dem ersten Aspekt beschrieben wurde, entsprechend.

Insbesondere kann die Abschottung der Leitungsdurchführung mit einer derart vorkonfektionierten Dichtungsbaugruppe in einem einzigen Montageschritt durchgeführt werden, denn im Gegensatz zu dem Verfahren gemäß dem weiter oben beschriebenen ersten Aspekt der Erfindung ist hier die Brandschutzbandage bereits entsprechend dem Leitungsumfang abgelängt und mit der Knetmasse versehen.

Bei allen Aspekten ist ein Kern der Erfindung eine einfache Abdichtung von dünnen Rohren und anderen Leitungen durch eine vorkonfektionierte oder bei der Montage nacheinander angeordnete Kombination einer Brandschutzbandage (auch als Brandschutzmatte bezeichnet) mit einer geeigneten Knetmasse.

Insbesondere kann die Brandschutzbandage eine flexible Trägerschicht, beispielsweise eine Gewebeschicht, aufweisen, an der ein, insbesondere kontinuierliches, Brandschutzband aus einem intumeszierenden Material befestigt ist. Insbesondere kann eine solche Brandschutzbandage mit deren Brandschutzband an der Leitung angelegt werden, und die Knetmasse kann an der von der Leitung abgewandten Trägerschicht angelegt und angedrückt werden.

Insbesondere kann die Brandschutzbandage vor oder nach dem Ablängen zu einer reduzierten Breite von etwa 30 mm abgeschnitten werden.

Insbesondere kann die Brandschutzbandage nach dem Umlegen um die Leitung etwa 5 cm aus der Öffnung nach außen ragen.

Gemäß einem weiteren Aspekt der Erfindung ist eine vorkonfektionierte Dichtungsbaugruppe zum brandschutzgerechten Abdichten einer Öffnung, durch die eine Leitung geführt ist (Leitungsdurchführung), in einer Wand oder Decke eines Gebäudes oder eines anderen Raums vorgesehen. Wie unter anderem weiter oben und weiter unten beschrieben, umfasst diese Dichtungsbaugruppe der hierin dargelegten Art eine bandförmige Brandschutzbandage mit einer Länge, die einem einfachen Umfang der Leitung mit oder ohne einen geringfügigen Überlapp entspricht, wobei die Brandschutzbandage feuerhemmendes und/oder intumeszierendes Material aufweist. Ferner umfasst die Dichtungsbaugruppe einen Knetmassenstreifen, der sich entlang eines der zwei umfangsbildenden Ränder der Brandschutzbandage erstreckt und an einer nicht zum Anlegen an der Leitung vorbestimmter Außenoberfläche der Brandschutzbandage angebracht ist.

Bei einer vorteilhaft ausgeführten Variante der erfindungsgemäßen Dichtungsbaugruppe ist die Dichtungsbaugruppe als insbesondere vorkonfektionierte Rollenware ausgeführt, die zum Einsatz für insbesondere mehrere Rohre ausgeführt ist.

Optional kann die Dichtungsbaugruppe ferner eine abziehbare Folie auf mindestens einer Oberfläche des Knetmassenstreifens aufweisen, die insbesondere eine Trennfolie bzw. Schutzfolie ausgeführt ist. Dies ist insbesondere bei einer als Rollenware ausgeführten Dichtungsbaugruppe von Vorteil, um einen Kontakt der Knetmasse mit der Bandage bei mehr als einer Rollenwicklung in gewünschtem Umfang zu verhindern.

Alternativ oder zusätzlich kann die mit dem Knetmassenstreifen versehene abgelängte Brandschutzbandage optional zu einer einfachen Lage mit Überlapp zusammengerollt sein, wobei überlappende Enden der Brandschutzbandage beispielsweise durch einen Teil des Knetmassenstreifens oder zusätzliche Knetmasse aneinander befestigt sein können.

Kurzbeschreibung der Zeichnungen

Die obigen Aspekte der Erfindung und deren Ausführungsformen und spezifische Ausgestaltungen werden nachfolgend anhand der in den beigefügten Zeichnungen dargestellten Beispiele näher erläutert. Die Zeichnungen sind schematisch gehalten. Sie können, müssen jedoch nicht als maßstabsgetreu zu verstehen sein. Gleiche Bezugszeichen stehen darin für gleiche oder einander in deren Funktion entsprechende Elemente. Es zeigen:

Figur 1a-c einzelne Schritte eines Verfahrens nach dem ersten Aspekt der Erfindung zum Abschotten einer Öffnung in einer Wand, durch die ein dünnes Rohr geführt ist;

Figur 2 ein Beispiel einer Dichtungsbaugruppe der hierin dargelegten Art zur Verwendung bei einem Verfahren nach einem weiteren Aspekt der Erfindung; und

Figur 3 ein weiteres Beispiel einer Dichtungsbaugruppe der hierin dargelegten Art.

Beschreibung von Ausführungsformen

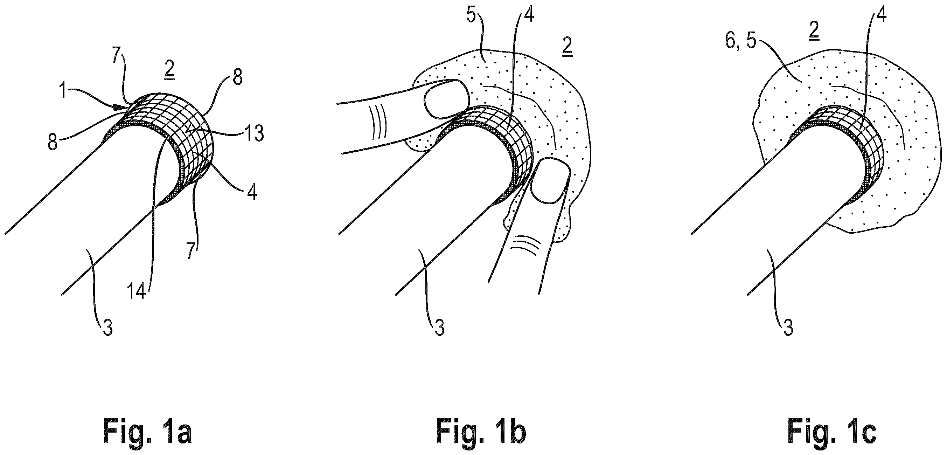

Alle weiter oben in der Beschreibung und in den nachfolgenden Ansprüchen erwähnten verschiedenen Ausführungsformen, Varianten und spezifischen Ausgestaltungsmerkmale des Verfahrens gemäß dem ersten und den weiteren Aspekten der Erfindung und der entsprechenden Dichtungsbaugruppe können bei den in den Figuren 1a bis 3 gezeigten Beispielen implementiert sein. Sie werden daher nachfolgend nicht alle nochmals wiederholt. Das Gleiche gilt entsprechend für die weiter oben bereits angegebenen Begriffsdefinitionen und Wirkungen in Bezug auf einzelne Merkmale, die in den Fig. 1a-3 gezeigt sind.

Figuren 1a bis 1c zeigen in einer perspektivischen Ansicht einzelne Schritte eines Verfahrens nach dem ersten Aspekt der Erfindung zum Abschotten einer Öffnung 1 in einer Trockenbauwand 2, durch die ein dünnes Rohr 3 (Leitung) geführt ist.

Zunächst wird (nicht gezeigt) eine bandförmige Brandschutzbandage 4, die in diesem Beispiel eine herkömmliche Brandschutzbandage CFS-B ist, von etwa 125 mm auf etwa 30 mm in der Breite reduziert (geschnitten) und zu einer dem Umfang des Rohrs 3 entsprechenden Länge abgelängt.

Wie Fig. 1a zeigt, wird die abgelängte Brandschutzbandage 4 dann um das Rohr 3 herum gelegt, so dass eine einfache Lage der Brandschutzbandage 4 am Rohr 3 gebildet wird. Dabei wird die Brandschutzbandage 4 so am Rohr 3 angelegt, dass ein Großteil der Brandschutzbandage 4, insbesondere mindestens eine Hälfte von deren Breite, innerhalb der Öffnung 1 in der Wand 2 verborgen liegt, und nur deren Restbreite - in diesem Beispiel etwa 5 mm - aus der Öffnung 1 heraus ragt.

Wie Fig. 1b und Fig. 1c zeigen, wird danach eine Knetmasse 5 ringförmig an dem aus der Öffnung 1 ragenden Teil der Brandschutzbandage 4 per Hand so angelegt, dass ein Knetmassenring 6 (in diesem Beispiel etwa scheiben- bzw. kreisringförmig, wobei es nicht auf eine regelmäßige Form ankommt) eines etwas größeren Außendurchmessers als der Öffnungsdurchmesser gebildet bzw. durch Kneten geformt wird. Der Knetmassenring 6 wird so geformt, dass er die Öffnung 1, d. h. den Ringspalt 7 zwischen dem Rohr 3 und dem Öffnungsrand 8, außenseitig schließt und dabei etwas über den Öffnungsrand 8 in der Wand 2 hinausgeht. Mit anderen Worten überdeckt der so geformte Knetmassenring 6 den Ringspalt 7 und wird sowohl an der Brandschutzbandage 4 als auch an dem Öffnungsrand 8 festgedrückt. Die Brandschutzbandage 4 wird somit fixiert und der Ringspalt 7 verschlossen, d. h. abgedichtet.

Eine hierzu geeignete Knetmasse 5 (Englisch: putty) ist idealerweise plastisch verformbar, um durch das Kneten an die jeweilige individuelle Form des Ringspalts 7 anpassbar zu sein. Die Knetmasse kann ferner dicht und/oder optional auch haftend ausgebildet sein. Es kann insbesondere eine dauerplastische Butylkautschukmischung sein.

Um die Brandschutzeigenschaften zu verbessern, kann die Knetmasse 5 insbesondere auch Brandschutzadditive enthalten. Die Knetmasse kann beispielsweise flammhemmend ausgebildet oder intumeszierend sein, sodass sie bei Hitzeeinwirkung aufschäumt und dadurch im Brandfall entstehende Fehlstellen in der Öffnung 1, beispielsweise durch eine schmelzende Leitung, verschließen kann.

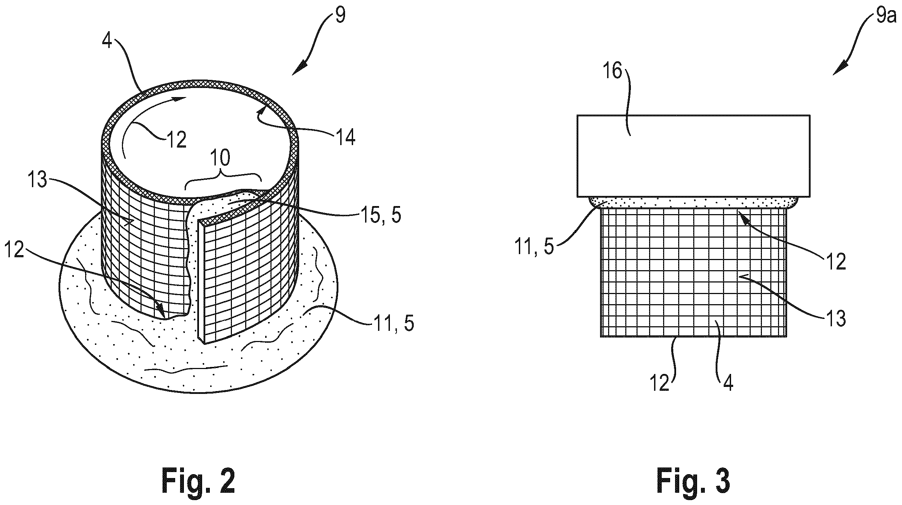

Fig. 2 zeigt ein Beispiel einer vorkonfektionierte Dichtungsbaugruppe 9 der hierin dargelegten Art zur Verwendung bei einem Verfahren nach einem weiteren Aspekt der Erfindung. Zur Herstellung der Dichtungsbaugruppe 9 wurde auch hier eine herkömmliche Brandschutzbandage 4 (Typ CFS-B) von etwa 125 mm auf etwa 30 mm in der Breite reduziert (geschnitten) und zu einer dem Umfang der abzudichtenden Leitung (nicht gezeigt) entsprechenden Länge zuzüglich einem geringfügigen Überlapp 10 abgelängt. Ferner umfasst die Dichtungsbaugruppe 9 einen Knetmassenstreifen 11, der sich entlang eines der zwei umfangsbildenden Ränder 12 der Brandschutzbandage 4 erstreckt und an einer nicht zum Anlegen an der Leitung vorbestimmter Außenoberfläche 13 der Brandschutzbandage 4 angebracht ist. Diese Außenoberfläche 13 ist in diesem Beispiel eine Gewebeschicht 13, an der innenseitig ein kontinuierliches Brandschutzband 14 aus einem intumeszierenden Material befestigt ist, das zum Anlegen an der Leitung bestimmt ist. Der Knetmassenstreifen 11 ist aus der gleichen Knetmasse 5 wie in Fig. 1a-1c gebildet.

Bei der in Fig. 2 dargestellten vorkonfektionierten Dichtungsbaugruppe 9 ist die mit dem Knetmassenstreifen 11 versehene abgelängte Brandschutzbandage 4 zu einer einfachen Lage mit Überlapp 10 zusammengerollt, wobei überlappende Enden der Brandschutzbandage 4 durch zusätzliche Knetmasse 15 aneinander befestigt sind.

Fig. 3 zeigt ein weiteres Beispiel einer vorkonfektionierten Dichtungsbaugruppe 9a, die zusätzlich eine abziehbare Transportschutzfolie 16 auf der Außenseite des Knetmassenstreifens 11 aufweist. Im Übrigen kann dabei das in Bezug auf Fig. 2 Ausgeführte auch in Bezug auf Fig. 3 sinngemäß gelten. In der in Fig. 3 dargestellten Variante ist die vorkonfektionierte Dichtungsbaugruppe 9a nicht zusammengerollt, was allerdings in einem weiteren Herstellungsschritt optional auch hier erfolgen kann.

Mit einer vorkonfektionierten Dichtungsbaugruppe 9 bzw. 9a der Figuren 2 bzw. 3 kann die Abschottung einer Leitungsdurchführung, beispielsweise am Rohr 3 der Fig. 1a, in einem einzigen Montageschritt (OneStep) mit einem Ergebnis wie in Fig. 1c durchgeführt werden.

Wie repräsentative Brandtests mit einer 100mm dicken Trockenbauwand und handgefertigten Prototypen, wie sie in Figuren 1a bis 3 gezeigt sind, nachweisen, wird das Testziel von bis zu EI 120 (gemäß EN-Feuerwiderstandsklassen für Raumabschluss und Hitzebarriere bzw. Wärmedämmung unter Brandeinfluss) für diverse Rohrtypen mit unterschiedlichen Durchmessern zwischen 16 mm und 32 mm erreicht, wie z. B. für

- ein PP-R Aquatherm Rohr mit 20 mm Durchmesser und 3,5 mm Wandstärke;
- ein PVC-Rohr mit 32 mm Durchmesser und 3,6 mm Wandstärke;
- ein PVC-Rohr mit 25 mm Durchmesser und 1,9 mm Wandstärke;
- Elektroleerrohre, flex, FFKu-EL-F mit 25 mm Durchmesser unbelegt;
- ein PE-Rohr mit 25 mm Durchmesser und 1,8 mm Wandstärke.

Die erfindungsgemäß reduzierte Menge des intumeszierenden Materials ist für diese Rohrtypen somit ausreichend. In Massivwänden und -decken sollte die Funktion der Bandage somit mindestens vergleichbar sein. Dabei ist, wie die nachfolgende Rechnung zeigt, eine Materialeinsparung um ca. 88% im Vergleich zur analogen herkömmlichen Einbaulösung mit CFS-B erreichbar, was besonders ressourcenschonend ist ($V_{CFS\ Calla}$ bezeichnet dabei das Volumen der erfindungsgemäß zugeschnittenen Brandschutzbandage 4):

Beispiel-Rechnung für den Materialverbrauch der Brandschutzbandage 4 gemäß der vorliegenden Erfindung:

$$\pi D = U,\ U = 78{,}5mm\ \text{für}\ D = 25mm\ \text{bei 1. Umwicklung}$$

Brandschutzmaterial: Bandage der Stärke 2mm und Breite 30mm (gemessen in RohrLängsrichtung)

$$\rightarrow V_{CFS\text{-}Calla} = U \cdot 2mm \cdot 30mm = 4710mm3$$

Mit einer herkömmlichen Brandschutzbandage CFS-B ergibt sich hingegen im Vergleich folgender Materialverbrauch:

2 Umwicklungen nötig, Stärke 2mm und Breite 125mm (gemessen in RohrLängsrichtung)

$$\rightarrow \text{VCFS-B} = U \cdot 2(\text{Umwicklungen}) \cdot 2mm \cdot 125mm = 39250mm3$$

$$\rightarrow \text{Einsparung 1 - VCFS-Calla/VCFS-B} = 1 - 0{,}12 = 0{,}88$$

Neben hierin beispielhaft beschriebenen Anwendungen der erfindungsgemäßen Verfahren und der erfindungsgemäßen Dichtungsbaugruppe sind auch weitere Anwendungen für andere Installationen wie Aluverbundrohre, isolierte Solarleitungen und Klimasplittanwendungen als mögliche Beispiele zu nennen. Des Weiteren ist auch eine Anwendung in existierenden Kombischottsystemen möglich. Anstatt der beschriebenen Knetmasse können auch alternative Baustoffe zur Abdichtung verwendet werden, sofern sie die erforderliche brandschutzgerechte Versiegelung gewährleisten können.

**Patentansprüche**

1. Verfahren zum Herstellen einer Dichtungsbaugruppe (9, 9a) zum brandschutzgerechten Abdichten einer Öffnung (1), durch die eine Leitung geführt ist, in einer Wand (2) oder Decke, **gekennzeichnet durch** die Schritte:

   - Ablängen einer bandförmigen Brandschutzbandage zu einer Länge, die einem einfachen Umfang der Leitung mit oder ohne Überlapp (10) entspricht, wobei die Brandschutzbandage feuerhemmendes und/oder intumeszierendes Material aufweist;
   - Anbringen eines Knetmassenstreifens (11) entlang eines der zwei Ränder (12) der abgelängten Brandschutzbandage (4), die dazu bestimmt sind, sich in Umfangsrichtung der Leitung zu erstrecken, wobei der Knetmassenstreifen (11) an einer nicht zum Anlegen an der Leitung vorbestimmter Außenoberfläche (13) der Brandschutzbandage (4) an dem genannten Rand (12) angedrückt oder anders befestigt wird; und
   - vorzugsweise Aufbringen einer abziehbaren Transportschutzfolie (16) auf mindestens einer Oberfläche des Knetmassenstreifens (11) und/oder vorzugsweise Zusammenrollen der mit dem Knetmassenstreifen (11) versehenen Brandschutzbandage (4) zu einer einfachen Lage mit Überlapp (10), wobei überlappende Enden der Brandschutzbandage (4) insbesondere durch einen Teil des Knetmassenstreifens (11) oder durch zusätzliche Knetmasse (15) aneinander temporär befestigt werden.

2. Verfahren nach Anspruch 1, **gekennzeichnet durch** die Schritte:

   - Umlegen der Dichtungsbaugruppe (9, 9a) um die Leitung herum, so dass eine Lage der Brandschutzbandage (4), gegebenenfalls mit Überlapp (10), an der Leitung gebildet wird, wobei der mit dem Knetmassenstreifen (11) versehene umfangsbildende Rand (12) der Brandschutzbandage (4) aus der Öffnung (1) nach außen ragt;
   - gegebenenfalls Abziehen der Transportschutzfolie (16); und
   - Formen des Knetmassenstreifens (11) zu einem Knetmassenring (6) eines etwas größeren Außendurchmessers als der Öffnungsdurchmesser, sodass der Knetmassenring (6) die Öffnung schließt und etwas über deren Rand (8) hinausgeht, und Festdrücken des so gebildeten Knetmassenrings (6) an der Brandschutzbandage (4) und an dem Öffnungsrand (8) zum Abdichten der Leitungsdurchführung.

3. Verfahren nach einem der vorhergehenden Ansprüche, **dadurch gekennzeichnet, dass** die Leitung einen Durchmesser in einem Bereich zwischen etwa 16 mm und etwa 32 mm aufweist.

4. Verfahren nach einem der vorhergehenden Ansprüche, **dadurch gekennzeichnet, dass** die Knetmasse (5)

   - elastisch und/oder plastisch verformbar; und/oder
   - dicht und/oder
   - haftend und/oder
   - als ein vernetztes Kautschukprodukt auf Gummibasis und/oder
   - mit Brandschutzadditiven

   ausgebildet ist.

5. Verfahren nach einem der vorhergehenden Ansprüche, **dadurch gekennzeichnet, dass** die Brandschutzbandage eine flexible Trägerschicht, insbesondere eine Gewebeschicht (13), aufweist, an der ein, insbesondere kontinuierliches, Brandschutzband (14) aus einem intumeszierenden Material befestigt ist.

6. Verfahren nach einem der vorhergehenden Ansprüche, **dadurch gekennzeichnet, dass** die Brandschutzbandage (4) mit deren Brandschutzband (14) an der Leitung angelegt wird, und die Knetmasse (5) an der Trägerschicht angelegt und angedrückt wird.

7. Verfahren nach einem der vorhergehenden Ansprüche, **dadurch gekennzeichnet, dass** die Brandschutzbandage (4) vor oder nach dem Ablängen zu einer reduzierten Breite von etwa 30 mm abgeschnitten wird.

8. Verfahren nach einem der vorhergehenden Ansprüche, **dadurch gekennzeichnet, dass** die Brandschutzbandage (4) nach dem Umlegen um die Leitung etwa 5 mm aus der Öffnung (1) nach außen ragt.

**Claims**

1. Method for producing a seal assembly (9, 9a) for sealing, in accordance with fire protection requirements, an opening (1) in a wall (2) or ceiling through which a line is fed, **characterized by** the steps of:

   - cutting a strip-shaped fire protection bandage to a length which corresponds to a single circumference of the line, with or without overlap (10), the fire protection bandage comprising fire-retardant and/or intumescent material;
   - applying a kneadable-compound strip (11) along one of the two edges (12) of the cut-to-length fire protection bandage (4) that are intended to extend in the circumferential direction of the line, the kneadable-compound strip (11) being pressed or otherwise fastened to said edge (12) on an outer surface of the fire protection bandage (4) that is not intended to be applied to the line (13); and
   - preferably applying a removable transport protection film (16) to at least one surface of the kneadable-compound strip (11) and/or preferably rolling up the fire protection bandage (4) provided with the kneadable-compound strip (11) to form a single layer with overlap (10), overlapping ends of the fire protection bandage (4) being temporarily fastened to one another, in particular by a portion of the kneadable-compound strip (11) or by additional kneadable compound (15).

2. Method according to claim 1, **characterized by** the steps of:

   - wrapping the seal assembly (9, 9a) around the line, such that a layer of the fire protection bandage (4) is formed on the line, optionally with overlap (10), the circumferential edge (12) of the fire protection bandage (4) that is provided with the kneadable-compound strip (11) protruding outward from the opening (1);
   - optionally removing the transport protection film (16); and
   - shaping the kneadable-compound strip (11) to form a kneadable-compound ring (6) of a slightly larger outer diameter than the opening diameter, such that the kneadable-compound ring (6) closes the opening and extends slightly beyond the edge (8) of the opening, and pressing the kneadable-compound ring (6) formed in this way firmly on the fire protection bandage (4) and on the opening edge (8) in order to seal the line feedthrough.

3. Method according to either of the preceding claims, **characterized in that** the line has a diameter in a range of between approximately 16 mm and approximately 32 mm.

4. Method according to any of the preceding claims, **characterized in that** the kneadable compound (5) is

   - elastically and/or plastically deformable; and/or
   - dense and/or
   - adhesive and/or
   - designed as a crosslinked rubber-based rubber product and/or
   - formed with fire protection additives.

5. Method according to any of the preceding claims, **characterized in that** the fire protection bandage comprises a flexible carrier layer, in particular a woven fabric layer (13), to which an, in particular continuous, fire protection wrap (14) made of an intumescent material is fastened.

6. Method according to any of the preceding claims, **characterized in that** the fire protection bandage (4), together with its fire protection wrap (14), is applied to the line, and the kneadable compound (5) is applied and pressed on the carrier layer.

7. Method according to any of the preceding claims, **characterized in that** the fire protection bandage (4) is cut to a reduced width of approximately 30 mm before or after being cut to length.

8. Method according to any of the preceding claims, **characterized in that** the fire protection bandage (4) protrudes approximately 5 mm outward from the opening (1) after being wrapped around the line.

**Revendications**

1. Procédé de fabrication d'un ensemble d'étanchéité (9, 9a) permettant l'étanchéification, conformément à des exigences en termes de protection contre les incendies, d'une ouverture (1) à travers laquelle est guidée une conduite dans un mur (2) ou un plafond, **caractérisé par** les étapes consistant à :

    - découper un bandage de protection contre l'incendie en forme de bande à une longueur correspondant à une simple circonférence de la conduite avec ou sans chevauchement (10), dans lequel le bandage de protection contre l'incendie comprend un matériau ininflammable et/ou intumescent ;
    - monter un ruban de pâte à modeler (11) le long de l'un des deux bords (12) du bandage de protection contre l'incendie (4) découpé et qui sont destinés à s'étendre dans la direction circonférentielle de la conduite, dans lequel le ruban de pâte à modeler (11) est pressé ou autrement fixé au niveau dudit bord (12) contre une surface extérieure (13) du bandage de protection contre l'incendie (4) qui n'est pas prédestinée à être appliquée contre la conduite ; et
    - de préférence, déposer une feuille de protection de transport (16) pouvant être ôtée sur au moins une surface du ruban de pâte à modeler (11) et/ou, de préférence, enrouler le bandage de protection contre l'incendie (4) pourvu du ruban de pâte à modeler (11) en une simple couche avec chevauchement (10), dans lequel les extrémités en chevauchement du bandage de protection contre l'incendie (4) sont fixées temporairement l'une à l'autre, en particulier par une partie du ruban de pâte à modeler (11) ou par une pâte à modeler (15) supplémentaire.

2. Procédé selon la revendication 1, **caractérisé par** les étapes consistant à :

    - rabattre l'ensemble d'étanchéité (9, 9a) autour de la conduite de sorte qu'une couche du bandage de protection contre l'incendie (4), éventuellement avec chevauchement (10), se forme sur la conduite, dans lequel le bord (12) formant la circonférence du bandage de protection contre l'incendie (4) et étant pourvu du ruban de pâte à modeler (11) dépasse vers l'extérieur de l'ouverture (1) ;
    - éventuellement, ôter la feuille de protection de transport (16) ; et
    - former le ruban de pâte à modeler (11) en un anneau de pâte à modeler (6) d'un diamètre extérieur légèrement plus grand que le diamètre d'ouverture de sorte que l'anneau de pâte à modeler (6) ferme l'ouverture et dépasse légèrement de son bord (8), et presser l'anneau de pâte à modeler (6) ainsi formé de manière à le fixer contre le bandage de protection contre l'incendie (4) et contre le bord d'ouverture (8) pour l'étanchéification du passage de conduite.

3. Procédé selon l'une des revendications précédentes, **caractérisé en ce que** la conduite présente un diamètre compris dans une plage allant d'environ 16 mm à environ 32 mm.

4. Procédé selon l'une des revendications précédentes, **caractérisé en ce que** la pâte à modeler (5) est réalisée

    - de manière à pouvoir être déformée de manière élastique et/ou plastique ; et/ou
    - de manière étanche ; et/ou
    - de manière adhésive ; et/ou
    - sous forme de produit en caoutchouc réticulé à base de caoutchouc ; et/ou
    - avec des additifs de protection contre l'incendie

5. Procédé selon l'une des revendications précédentes, **caractérisé en ce que** le bandage de protection contre l'incendie présente une couche de support flexible, en particulier une couche de tissu (13), à laquelle est fixée une bande de protection contre l'incendie (14), en particulier continue, constituée d'un matériau intumescent.

6. Procédé selon l'une des revendications précédentes, **caractérisé en ce que** le bandage de protection contre l'incendie (4) est appliqué avec sa bande de protection contre l'incendie (14) contre la conduite, et la pâte à modeler (5) est appliquée et pressée contre la couche de support.

7. Procédé selon l'une des revendications précédentes, **caractérisé en ce que** le bandage de protection contre l'incendie (4) est coupé à une largeur réduite d'environ 30 mm avant ou après la découpe.

8. Procédé selon l'une des revendications précédentes, **caractérisé en ce que** le bandage de protection contre l'incendie (4) dépasse d'environ 5 mm vers l'extérieur de l'ouverture (1) après avoir été rabattu autour de la conduite.

**Fig. 1a**          **Fig. 1b**          **Fig. 1c**

EP 4 237 721 B1

**Fig. 2**

**Fig. 3**

EP 4 237 721 B1

**IN DER BESCHREIBUNG AUFGEFÜHRTE DOKUMENTE**

**In der Beschreibung aufgeführte Patentdokumente**

- JP 2000240854 A